# EUROPÄISCHE PATENTSCHRIFT

(11) **EP 3 121 501 B1**
(45) Veröffentlichungstag und Bekanntmachung des Hinweises auf die Patenterteilung: **08.07.2020**
(21) Anmeldenummer: 16180261.6
(22) Anmeldetag: 20.07.2016
(51) Int. Cl.: F16L 37/088, B60K 15/04

(54) **KRAFTFAHRZEUG MIT FAHRZEUGKOMPONENTE**
MOTOR VEHICLE WITH VEHICLE COMPONENT
VEHICULE AUTOMOBILE AVEC COMPOSANT DE VEHICULE

(30) Priorität: 22.07.2015 DE 102015111895
(43) Veröffentlichungstag der Anmeldung: 25.01.2017
(73) Patentinhaber: Dr. Ing. h.c. F. Porsche AG, 70435 Stuttgart (DE); Magna Steyr Fuel Systems GesmbH, 8261 Sinabelkirchen (AT)
(72) Erfinder: Visarius, Ronald, 53840 Troisdorf (DE); Krezer, Armin, 74182 Obersulm (DE); Braunwarth, Dirk, 73760 Ostfildern (DE); Podewski, Kai, 75181 Pforzheim (DE); Menke, Andreas, 71665 Vaihingen a.d. Enz/Enzweihingen (DE); Österle, Josef, 75417 Mühlacker (DE); Gschanes, Bernhard, 8200 Gleisdorf (AT); Schinnerl, Michael, 8061 St. Radegund (AT)
(74) Vertreter: Sturm, Christoph

(56) Entgegenhaltungen:
- EP-A2- 2 372 209
- DE-A1-102008 005 717
- FR-A1- 2 331 743
- US-A1- 2014 209 074

## Beschreibung

Die vorliegende Erfindung betrifft ein Kraftfahrzeug nach dem Oberbegriff des Patentanspruchs 1.

Es sind verschiedene Fahrzeugkomponenten im Stand der Technik bekannt geworden, die eine kuppelbare Verbindung von Kraftstoffleitungen ermöglichen. So zeigt die DE 101 00 128 A1 eine Schraubverbindung zum Verbinden von zwei Rohren, z. B. zwischen einem Kraftstofftank und einem Einfüllstützen. Dabei ist eine Überwurfmutter vorgesehen, welche an einem elastisch leicht nachgiebigen Ringwulst des einen Rohres anliegt und mit einem Gewindeteil des anderen Rohrs verschraubt wird. An dem Ringwulst liegt zudem ein Dichtring an, welcher durch das Verschrauben gegen das Ende des anderen Rohres gedrückt wird.

Mit der DE 10 2008 005 717 A1 ist ein Kraftstofftank mit einem Einfüllrohr und einem Stutzen bekannt geworden, welche ineinandergesteckt und durch flexible Kunststoff-Rasthaken miteinander verbunden werden. Diese Verbindung soll aufgrund der in Axialrichtung formstabilen Rasthaken eine hohe Abzugskraft aufweisen.

Problematisch an den vorgenannten Verbindungen ist, dass bei einem Auftreten von Querkräften Kraftstoff austreten könnte.

Die DE 20 2011 105 646 U1 zeigt eine Verbindung zwischen einem Tankstutzen und einem flexiblen Rohr, welche durch eine bajonettartig verdrehbare Hülse gesichert wird. Zur kraftstoffdichten Verbindung muss die Hülse einen Dichtring gegen eine stirnseitige Aufweitung pressen. Da die Dichtwirkung von der Anpresskraft der Hülse abhängt, könnten sich Querkräfte problematisch auswirken. Eine andere in der DE 20 2011 105 646 U1 beschriebene Ausgestaltung zeigt ein geschlitztes Rohr, sodass es sich beim Aufstecken auf ein anderes Rohr aufweiten kann. Nach dem Aufstecken wird die Verbindung durch Kabelbinder oder Schlauchschellen gesichert. Solche geschlitzten Rohre könnten bei einem Auftreten von Querkräften problematisch sein.

Weiterer Stand der Technik ist aus US 2014/209 074 A1, FR 2 331 743 A1 und der EP 2 372 209 A2 bekannt. Demgegenüber ist es die Aufgabe der vorliegenden Erfindung, ein Kraftfahrzeug zur Verfügung zu stellen, welche eine zuverlässige Verbindung von Kraftstoffleitungen insbesondere auch beim Auftreten von Querkräften ermöglichen.

Diese Aufgabe wird gelöst durch ein Kraftfahrzeug mit den Merkmalen des Anspruchs 1. Bevorzugte Weiterbildungen sind Gegenstand der Unteransprüche. Weitere Vorteile und Merkmale der vorliegenden Erfindung ergeben sich aus der allgemeinen Beschreibung und der Beschreibung der Ausführungsbeispiele.

Die Fahrzeugkomponente des erfindungsgemäßen Kraftfahrzeugs umfasst wenigstens eine Kupplungseinrichtung mit zwei kuppelbaren Kupplungselementen. Die Kupplungselemente sind zur kraftstoffdichten Verbindung zweier kraftstoffführender Leitungen geeignet und ausgebildet. Die Kupplungseinrichtung umfasst wenigstens eine Sicherungseinrichtung zur Sicherung der verbundenen Kupplungselemente gegen ein unbeabsichtigtes Lösen voneinander. Dabei ist das eine der beiden Kupplungselemente als ein metallisches Mutterelement ausgebildet. Das Mutterelement ist dazu geeignet und ausgebildet, mit einer der beiden Leitungen fest verbunden zu werden. Das andere Kupplungselement ist als ein metallisches Vaterelement ausgebildet. Das Vaterelement ist dazu geeignet und ausgebildet, mit einer anderen der beiden Leitungen fest verbunden zu werden. Das Vaterelement ist zur Kupplung der beiden Leitungen in das Mutterelement einführbar. Im gekuppelten Zustand der beiden Leitungen ist zwischen dem Mutterelement und dem Vaterelement ein sich axial erstreckender Überlappungsabschnitt ausgebildet. Der Überlappungsabschnitt umfasst wenigstens eine radiale Dichtungseinrichtung.

Die Erfindung hat viele Vorteile. Ein erheblicher Vorteil ist, dass die Kupplungselemente aus einem metallischen Werkstoff gefertigt sind. Dadurch ergibt sich eine besonders zuverlässige und stabile Verbindung. Die Leitungen können dadurch so verbunden werden, dass bei einwirkenden Querkräften und beispielsweise bei einem Pfahlcrash einem Austreten von Kraftstoff sehr zuverlässig entgegengewirkt wird.

Ein weiterer Vorteil ist, dass zwischen den zusammengekuppelten Kupplungselementen ein axialer Überlappungsabschnitt vorgesehen ist, in welchem wenigstens eine radiale Dichtungseinrichtung angeordnet ist. Dadurch ist die Verbindung bereits mit dem Einstecken des Vaterelements in das Mutterelement zuverlässig abgedichtet. Die Abdichtung ist somit insbesondere unabhängig von der Wirkung einer Sicherungseinrichtung gegen unbeabsichtigtes Lösen. Ein Vorteil eines solchen Überlappungsbereiches mit einer radialen Dichtung ist auch, dass die Dichtwirkung unabhängig von einer auf die beiden Kupplungselemente einwirkenden Anpresskraft ist. Dadurch ergibt sich ein erheblicher Vorteil gegenüber beispielsweise Flanschverbindungen, bei denen die Dichtwirkung in der Regel von der auf die Flanschfläche einwirkenden Kraft abhängt.

Besonders bevorzugt sind die Kupplungselemente aus einer Stahllegierung gefertigt. Das ermöglicht eine besonders kostengünstige Herstellung und bietet zugleich eine hohe Stabilität. Die Kupplungselemente können auch aus einer anderen geeigneten und insbesondere kraftstoffbeständigen Metalllegierung gefertigt sein. Beispielsweise können die Kupplungselemente aus einer Aluminiumlegierung oder einer Messinglegierung bestehen. Insbesondere sind das Vaterelement und das Mutterelement aus dem gleichen metallischen Werkstoff gefertigt. Das Vaterelement und das Mutterelement können auch aus zwei verschiedenen metallischen Werkstoffen bestehen. Die Kupplungselemente sind bevorzugt als Drehteile und/oder Frästeile gefertigt. Die Kupplungselemente können auch als Gussteile und/oder Schmiedeteile vorgesehen sein. Es ist möglich, dass die Fahrzeugkomponente auch die mit den Kupplungselementen verbundenen Leitungen umfasst.

Eine der beiden Leitungen ist als ein Einfüllrohr für einen Kraftstofftank eines Kraftfahrzeuges ausgebildet. Die andere der beiden Leitungen ist als ein rohrförmiger Tankstutzen des Kraftstofftanks ausgebildet. Dabei ist der Tankstutzen an dem Kraftstofftank befestigt. Das Einfüllrohr ist an der Karosserie des Kraftfahrzeugs befestigt. Das Einfüllrohr kann mit einer Einfüllöffnung für einen Tankrüssel einer Tanksäule verbunden sein oder als eine solche ausgebildet sein. Insbesondere weisen das Einfüllrohr und/oder der Tankstutzen einen räumlich gebogenen Verlauf auf. Möglich ist auch ein räumlich winkliger Verlauf. Es ist möglich, dass die Fahrzeugkomponente auch das Einfüllrohr und/oder den Tankstutzen umfasst.

Eine Ausgestaltung der Leitungen als Einfüllrohr und Tankstutzen bietet eine besonders vorteilhafte Verwendung der metallischen Kupplungselemente. Die hohe Beständigkeit gegenüber Querkräften bei einem seitlichen Aufprall ist hier besonders von Vorteil, da solche Leitungen in der Regel entlang einer Seite des Fahrzeugs verlaufen. Besonders vorteilhaft kann eine solche Ausgestaltung auch bei einem sogenannten Niedrigemissionsfahrzeug bzw. Low Emission Vehicle (LEV) eingesetzt werden, da das Kraftstoffsystem solcher Fahrzeuge besonderen Anforderungen unterliegt uns z. B. häufig mit einem Überdruck beaufschlagt wird. Dadurch ist eine zuverlässige und stabile Verbindung der Leitungen hier besonders entscheidend.

Der Überlappungsabschnitt weist vorzugsweise eine Länge auf, welche wenigstens der Hälfte des Innendurchmessers der Leitung entspricht, die mit dem Mutterelement verbunden ist. Der Überlappungsabschnitt kann auch eine Länge aufweisen, welche wenigstens der Hälfte des Innendurchmessers der Leitung entspricht, die mit dem Vaterelement verbunden ist. Ein Überlappungsabschnitt mit einer solchen Länge bietet eine besonders zuverlässige Verbindung der Kraftstoffleitungen. Aufgrund eines solchen in axialer Richtung entsprechend lang gestreckten Überlappungsabschnittes kann selbst bei einem entsprechenden Auseinanderziehen der Kupplungselemente durch auftretende Querkräfte die Kraftstoffdichtheit erhalten werden.

Besonders bevorzugt weist der Überlappungsabschnitt eine Länge von wenigstens 75 % und vorzugsweise von wenigstens 80 % und besonders bevorzugt von wenigstens 90 % des Innendurchmessers der mit dem Mutterelement und/oder dem Vaterelement verbundenen Leitung. Möglich ist auch, dass der Überlappungsabschnitt eine Länge aufweist, welche dem Innendurchmesser der jeweiligen Leitungen entspricht. Möglich und bevorzugt ist auch, dass der Überlappungsabschnitt eine Länge aufweist, welche um einen bestimmten Faktor größer ist als der Innendurchmesser der mit dem Mutterelement oder dem Vaterelement verbundenen Leitung. Der Faktor kann beispielsweise 1,2 oder vorzugsweise 1,5 oder auch 2,0 oder 2,5 oder mehr betragen. Möglich ist auch, dass der Überlappungsabschnitt in bestimmten Ausgestaltungen kürzer ausfällt.

Es ist möglich, dass der Überlappungsabschnitt wenigstens zwei radial verlaufende Teilabschnitte aufweist. Die Teilabschnitte weisen vorzugsweise unterschiedliche Durchmesser auf. Die Teilabschnitte können auch identische Durchmesser aufweisen. Besonders bevorzugt sind die Teilabschnitte durch wenigstens einen rampenförmig verlaufenden Teilabschnitt verbunden. Der rampenförmige Teilabschnitt kann einen geraden oder einen kurvenförmigen Rampenverlauf aufweisen. Es können auch mehrere, mit unterschiedlichen Durchmessern versehene Teilabschnitte vorgesehen sein, welche durch mehrere rampenförmig verlaufende Teilabschnitte miteinander verbunden sind. Eine Ausgestaltung des Überlappungsabschnittes mit unterschiedlichen Teilabschnitten ermöglicht einen entsprechend langgestreckten Überlappungsabschnitt und zugleich eine besonders gute Einführbarkeit und somit ein unkompliziertes Zusammenkuppeln der Kupplungselemente. Insbesondere werden die unterschiedlichen Durchmesser der Teilabschnitte dadurch erreicht, dass die Kupplungselemente zu ihren aufeinander zu zeigenden Enden hin dünnwandiger ausgestaltet sind. Bevorzugt bleibt der für die Leitung des Kraftstoffs vorgesehene Strömungsquerschnitt unverändert von einer Änderung des Durchmessers der Teilabschnitte.

Möglich und bevorzugt ist, dass wenigstens eine der beiden Leitungen aus einem metallischen Werkstoff besteht. Beispielsweise ist die Leitung aus einer Stahllegierung gefertigt. Möglich sind auch andere metallische Legierungen. Insbesondere ist das Einfüllrohr für den Kraftstofftank aus einem metallischen Werkstoff gefertigt. Möglich ist aber auch, dass der rohrförmige Tankstutzen des Kraftstofftanks aus einem metallischen Werkstoff besteht.

In vorteilhaften Ausgestaltungen können beide Leitungen aus einem metallischen Werkstoff bestehen. Insbesondere bestehen der Tankstutzen und das Einfüllrohr aus einem metallischen Werkstoff und beispielsweise aus einer Stahllegierung. Durch eine solche Ausgestaltung können die Stabilität und die Beständigkeit gegenüber Querkräften noch weiter verbessert werden.

Es ist besonders bevorzugt, dass die aus einem metallischen Werkstoff bestehende Leitung stoffschlüssig mit dem zugehörigen Kupplungselement verbunden ist. Insbesondere sind die metallische Leitung und das zugehörige Kupplungselement miteinander verschweißt. Möglich ist auch eine geklebte oder gelötete Verbindung. Es können auch andere geeignete und insbesondere unlösbare Fügeverbindungen vorgesehen sein. Das Kupplungselement und wenigstens ein Teil der zugehörigen metallischen Leitung können auch einstückig ausgebildet sein. Beispielsweise ist das Mutterelement mit einer metallischen Leitung stoffschlüssig verbunden. Es kann auch das Vaterelement mit der metallischen Leitung verbunden sein. Eine solche Verbindung kann kostengünstig hergestellt werden und bietet zudem eine dauerhafte Beständigkeit.

In einer vorteilhaften Weiterbildung umfasst wenigstens eines der beiden Kupplungselemente an einem Ende wenigstens einen Aufsteckbereich. Der Aufsteckbereich umfasst wenigstens eine gerippte Oberfläche zum Aufstecken einer Leitung. Ein Aufsteckbereich ermöglicht eine sehr unaufwändige und zugleich zuverlässige Verbindung einer Kunststoffleitung mit dem jeweiligen Kupplungselement. Die aufzusteckende Leitung besteht insbesondere aus einem Kunststoffmaterial besteht. Der Aufsteckbereich kann auch dazu geeignet und ausgebildet sein, dass eine Leitung aus einem Gummimaterial oder einem anderen nichtmetallischen Werkstoff aufgesteckt wird.

Der Aufsteckbereich ist vorzugsweise stoffschlüssig mit dem Kupplungselement verbunden. Beispielsweise ist der Aufsteckbereich angeschweißt. Möglich ist auch eine Klebe- oder Lötverbindung. Das Kupplungselement und der Aufsteckbereich können auch einstückig ausgebildet sein. Möglich ist auch, dass der Aufsteckbereich als ein separates Bauteil vorgesehen ist. Beispielsweise können der Aufsteckbereich und das Kupplungselement für die Montage miteinander verschraubt werden. Möglich ist, dass zur Sicherung der Kunststoffleitung auf dem Aufsteckbereich wenigstens eine Schlauchschelle und/oder wenigstens ein Kabelbinder vorgesehen ist. Vorzugsweise umfasst der Aufsteckbereich wenigstens eine Dichtungseinrichtung und beispielsweise wenigstens einen O-Ring. Der Aufsteckbereich besteht insbesondere aus einer Metalllegierung. Vorzugsweise aus dem gleichen Werkstoff wie das mit dem Aufsteckbereich verbundene Kupplungselement. Insbesondere ist der Aufsteckbereich mit dem Vaterelement verbunden.

Vorzugsweise ist die Dichtungseinrichtung teilweise in wenigstens in einer radial verlaufenden Nut angeordnet. Die Nut ist insbesondere an der Außenseite des Vaterelements vorgesehen. Eine solche Ausgestaltung ermöglicht eine zuverlässige Abdichtung und zugleich eine schnelle und kostengünstige Montage der Dichtungseinrichtung. Möglich ist auch, dass die Nut an der Innenseite des Mutterelements vorgesehen ist. Dabei erstreckt sich insbesondere wenigstens ein Teil der Dichtungseinrichtung außerhalb der Nut. Möglich und bevorzugt ist, dass die Nut als eine Ausnehmung in der Wandung des Kupplungselements vorgesehen ist, sodass der Strömungsquerschnitt von den die Nut umgebenden Wandungen nicht eingeschnitten wird.

Die Dichtungseinrichtung umfasst insbesondere wenigstens einen O-Ring. Besonders bevorzugt umfasst die Dichtungseinrichtung wenigstens zwei O-Ringe. Die Verwendung von wenigstens zwei O-Ringen verbessert die Beständigkeit der Verbindung gegenüber auftretenden Querkräften. Die O-Ringe sind insbesondere in jeweils einer radial verlaufenden Nut aufgenommen. Möglich sind auch drei oder vier oder mehr in entsprechenden Nuten angeordnete O-Ringe. Es können auch andere Arten von Dichtungselementen bzw. Dichtungsringen vorgesehen sein.

Es ist bevorzugt, dass die Sicherungseinrichtung wenigstens ein Sicherungselement und wenigstens einen Sicherungsabschnitt und wenigstens einen Vorsprung umfasst. Dabei sind der Sicherungsabschnitt und der Vorsprung insbesondere an verschiedenen Kupplungselementen angeordnet. Beispielsweise sind der Sicherungsabschnitt an dem Mutterelement und der Vorsprung an dem Vaterelement angeordnet. Der Sicherungsabschnitt ist insbesondere dazu geeignet und ausgebildet, den Vorsprung in einem verbundenen Zustand der Kupplungselemente aufzunehmen. Das Sicherungselement ist insbesondere dazu geeignet und ausgebildet, ein Verlassen des Vorsprungs aus dem Sicherungsabschnitt formschlüssig zu blockieren. Möglich ist auch ein kraftschlüssiges Blockieren, z. B. durch eine vorgespannte Feder. Insbesondere wird der Vorsprung bei einem Kuppeln der Kupplungselemente in den Sicherungsabschnitt eingeführt. Eine solche Sicherungseinrichtung ermöglicht ein unkompliziertes Kuppeln und zugleich eine sehr beständige Verbindung. Der Sicherungsabschnitt und der Vorsprung sind vorzugsweise radial umlaufend an dem jeweiligen Kupplungselement ausgebildet. Möglich ist auch, dass entlang des Umfangs des jeweiligen Kupplungselementes voneinander beabstandete Sicherungsabschnitte und/oder Vorsprünge vorgesehen sind. Es kann auch nur ein Sicherungsabschnitt und/oder Vorsprung vorgesehen sein. Der Sicherungsabschnitt kann beispielsweise als eine Aussparung oder ein glockenförmiger Bereich ausgebildet sein. Der Vorsprung umfasst insbesondere wenigstens einen Hinterschnitt und ist beispielsweise als eine Nase oder dergleichen ausgebildet.

Das Sicherungselement ist bevorzugt als eine ringförmige Federklammer ausgebildet. Eine solche Federklammer kann kostengünstig hergestellt und unaufwändig montiert werden. Zudem biete eine solche Federklammer eine besonders beständige Sicherung der gekuppelten Leitungen. Die Federklammer kann beispielsweise als ein Ring mit freien Enden ausgebildet sein. Der Ring kann auch geschlossen sein. Insbesondere ist an wenigstens einem Ende und vorzugsweise an beiden Enden des Ringes jeweils eine Montagehilfe angeordnet. Die Montagehilfe kann beispielsweise ein händisches Greifen erleichtern oder die Aufnahme in ein entsprechendes Montagewerkzeug ermöglichen. Eine solche Montagehilfe erleichtert das Umlegen der Federklammer um das Kupplungselement bei der Montage und vereinfacht ein Öffnen bei einer späteren Entkopplung.

In einer vorteilhaften Weiterbildung umgreift die Federklammer wenigstens teilweise das mit dem Sicherungsabschnitt versehene Kupplungselement. Das mit dem Sicherungsabschnitt versehene Kupplungselement weist in einer Wandung wenigstens eine Sicherungsaussparung auf. Vorzugsweise erstreckt sich die Federklammer durch die Sicherungsaussparung in den Sicherungsabschnitt. Die sich in den Sicherungsabschnitt erstreckende Feder greift insbesondere hinter wenigstens einen Abschnitt des im Sicherungsabschnitt liegenden Vorsprungs. Eine solche Ausgestaltung ermöglicht eine besonders unkomplizierte und stabile Sicherung der Kupplung zweier Leitungen. Beispielsweise muss die Federklammer nur um ein Kupplungselement gelegt werden und drückt sich anschließend selbstständig in den jeweiligen Sicherungsabschnitt. Dabei kann vorgesehen sein, dass die sich in den Sicherungsabschnitt erstreckenden Bereiche der Federklammer entsprechend vorgebogen sind. Beispielsweise können diese Bereiche nach innen in den ringförmigen Verlauf der Federklammer gebogen sein. Es ist möglich, dass zwei oder drei oder vier oder mehr Sicherungsaussparungen an dem Kupplungselement vorgesehen sind.

In einer vorteilhaften Ausgestaltung ist der Vorsprung an einer Vorderseite angeschrägt. Die Vorderseite ist dabei insbesondere die Seite, mit welcher der Vorsprung zuerst in das entsprechende Kupplungselement und insbesondere in das Mutterelement eingeführt wird. Der angeschrägte Vorsprung ist insbesondere dazu geeignet und ausgebildet, bei einem Zusammenkuppeln der Kupplungselemente die im Sicherungsabschnitt befindliche Federklammer aus dem Sicherungsabschnitt zu drücken. Das ermöglicht ein Zusammenkuppeln ohne ein zusätzliches Auseinanderdrücken der Federklammer. Die Kupplungselemente können einfach ineinander gesteckt werden, wobei sich die Federklammer hinter dem Vorsprung durch die eigene Federspannung selbstständig schließt und wieder in den Sicherungsabschnitt eingreift, sodass ein Heraustreten des Vorsprungs zuverlässig blockiert wird. Bevorzugt ist auch, dass die Rückseite des Vorsprungs so ausgebildet ist, dass die Federklammer bei einem Auseinanderziehen der Kupplungselemente im Sicherungsabschnitt gehalten wird. Beispielsweise ist ein Hinterschnitt vorgesehen.

In allen Ausgestaltungen ist bevorzugt, dass eines der beiden Kupplungselemente wenigstens ein optisches Markierungselement umfasst. Insbesondere umfasst das andere der beiden Kupplungselemente wenigstens ein Sichtfenster. Vorzugsweise sind das Markierungselement und das Sicherfenster so zueinander positioniert, dass in einem verbundenen Zustand der Kupplungselemente das Markierungselement innerhalb des Sichtfensters erkennbar ist. Insbesondere ist das Markierungselement ausschließlich in einem verbundenen Zustand der Kupplungselemente durch das Sichtfenster erkennbar. Dadurch kann die korrekte Montage der Kupplungselemente zuverlässig überwacht werden. Vorzugsweise ist das Sichtfenster dabei an dem Kupplungselement vorgesehen, welches auch den Sicherungsabschnitt trägt. Beispielsweise sind das Markierungselement an dem Vaterelement und das Sichtfenster an dem Mutterelement angeordnet. Das Markierungselement kann beispielsweise als eine umlaufende Nut ausgebildet sein. In die Nut ist beispielsweise ein farbiger Ring oder dergleichen eingelegt. Möglich ist auch, dass die Nut farblich markiert und beispielsweise lackiert ist.

Es ist auch möglich, dass ein haptisches oder mechanisches Markierungselement vorgesehen ist. Beispielsweise kann durch ein fühlbares Hervorstehen des Markierungselements innerhalb des Sichtfensters ein korrektes Kuppeln erkennbar gemacht werden. Möglich ist auch ein akustisch wirkendes Markierungselement. Es kann auch ein Markierungselement ohne ein Sichtfenster vorgesehen sein. Möglich ist auch, dass das Sichtfenster oder ein anderer Bereich des Kupplungselementes ebenfalls eine insbesondere farbliche Markierung aufweist, um eine korrekte Zuordnung von zusammengehörenden Kupplungselementen zu ermöglichen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: ein stark schematisiertes Kraftfahrzeug mit einer Fahrzeugkomponente;
- Figur 2: ein Kraftstofftank mit Leitungen in einer perspektivischen Ansicht;
- Figur 3: eine Fahrzeugkomponente in einer geschnittenen Seitenansicht;
- Figur 4: eine andere Ausführung einer Fahrzeugkomponente in einer geschnittenen Seitenansicht;
- Figur 5: die Fahrzeugkomponente der Figur 4 in einer geschnittenen, perspektivischen Darstellung;
- Figur 6: eine Fahrzeugkomponente in einer perspektivischen Ansicht;
- Figur 7: eine Fahrzeugkomponente in einer perspektivischen Detailansicht; und
- Figur 8: eine Weiterbildung einer Fahrzeugkomponente in einer Seitenansicht.

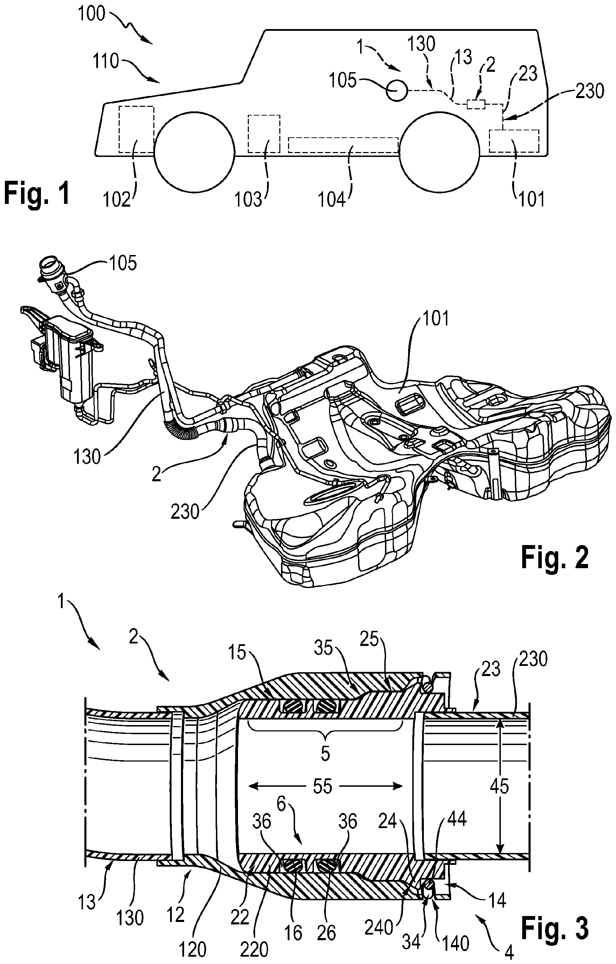

Die Figur 1 zeigt ein als Hybridfahrzeug 110 ausgebildetes erfindungsgemäßes Kraftfahrzeug 100, welches mit eine Fahrzeugkomponente 1 ausgestattet ist. Die Fahrzeugkomponente 1 umfasst hier eine Kuppelungseinrichtung 2, mittels der zwei kraftstoffführende Leitungen 13, 23 kraftstoffdicht miteinander verbunden sind. Die Kuppelungseinrichtung 2 wird in den nachfolgenden Figuren näher beschrieben. Die eine Leitung 13 ist hier als ein Einfüllrohr 130 eines Kraftstoffstanks 101 des Hybridfahrzeugs 110 ausgebildet. Die andere Leitung 23 ist als ein mit dem Kraftstofftank 101 verbundener Tankstutzen 230 ausgebildet. Das Einfüllrohr 130 ist an einem Ende mit einer entsprechend verschließbaren Einfüllöffnung 105 versehen, über die der Kraftstofftank 101 befüllbar ist.

Das Hybridfahrzeug 110 verfügt zudem über einen Verbrennungsmotor 102 sowie über einen elektrischen Antrieb 103, welcher von einer Traktionsbatterie 104 mit Energie versorgt wird. Bei Hybridfahrzeugen werden besondere Anforderungen an das Kraftstoffsystem gestellt, da in den Phasen mit Elektroantrieb die im Kraftstofftank 101 vorherrschenden Kraftstoffdämpfe nicht im Verbrennungsmotor 102 verwertet werden können. Häufig werden die Kraftstofftanks 101 solcher Hybridfahrzeuge 110 daher mit einem bestimmten Druck beaufschlagt. Die Fahrzeugkomponente 1 kann hier besonders vorteilhaft eingesetzt werden, da die Kuppelungseinrichtung 2 vorzugsweise solchen Anforderungen an das Kraftstoffsystem genügt. Zudem bietet die hier vorgestellte Kuppelungseinrichtung 2 auch eine besonders hohe Beständigkeit gegenüber auftretenden Querkräften, sodass eine dichte Verbindung der kraftstoffführenden Leitungen 13, 23 besonders zuverlässig gewährleistet werden kann.

Die Figur 2 zeigt eine perspektivische Ansicht eines Kraftstofftanks 101 mit einem angeschlossenen Tankstutzen 230. Der Tankstutzen 230 ist mit dem Einfüllrohr 130 mittels der Kuppelungseinrichtung 2 verbunden. An einem Ende des Einfüllrohrs 130 ist die Einfüllöffnung 105 vorgesehen. Das Einfüllrohr 130 ist vorzugsweise an einer hier nicht gezeigten Karosserie befestigt. Der Tankstutzen 230 ist vorzugsweise mit dem Kraftstofftank 101 verbunden und an diesem befestigt. Zudem umfasst der Kraftstofftank 101 weitere Leitungen und beispielsweise eine Auffangeinrichtung für Kraftstoffdämpfe. Das Einfüllrohr 130 sowie der Tankstutzen 230 weisen hier jeweils mehrere räumliche Biegungen auf. Aufgrund der komplexen räumlichen Struktur ist nach der Montage solcher Leitungen 13, 23 in der Regel keine Veränderung ihrer Positionierung mehr möglich. Die hier vorgestellte Kuppelungseinrichtung 2 bietet den Vorteil, dass die montierten Leitungen 13, 23 kraftstoffdicht miteinander kuppelbar sind, ohne dass die Leitungen 13, 23 dabei gedreht oder bewegt werden müssen.

In der Figur 3 ist eine geschnittene Seitenansicht der Kuppelungseinrichtung 2 mit zwei gekuppelten Kuppelungselementen 12, 22 gezeigt. Ein Kuppelungselement 12 ist hier als ein Mutterelement 120 und das andere Kuppelungselement 22 als ein Vaterelement 220 ausgeführt. Das Mutterelement 120 ist aus einer Stahllegierung gefertigt und stoffschlüssig mit einer metallischen Leitung 13 verbunden, z. B. durch Verschweißen. Die Leitung 13 ist insbesondere als Einfüllrohr 130 ausgebildet. Das Vaterelement 220 ist hier ebenfalls aus einer Stahllegierung gefertigt und stoffschlüssig mit einer anderen Leitung 23 verbunden, welche hier als ein Tankstutzen 230 ausgebildet ist.

In dem hier gezeigten gekuppelten Zustand ist das Vaterelement 220 in das Mutterelement 120 eingeführt. Dabei ist zwischen dem Vaterelement 220 und dem Mutterelement 120 ein langgestreckter, in axialer Richtung verlaufender Überlappungsabschnitt 5 ausgebildet. Die Länge 55 des Überlappungsabschnitts 5 ist hier größer ausgebildet als der Innendurchmesser 45 der mit dem Vaterstück 220 verbundenen Leitung 23. Zudem ist die Länge 55 des Überlappungsabschnitts 5 größer als der Innendurchmesser der mit dem Mutterelement 120 verbundenen Leitung 13 sowie größer als der Innendurchmesser im Strömungsbereich des Vaterelements 220. Ein solcher Überlappungsabschnitt 5 bietet aufgrund seiner axialen Ausdehnung eine besonders zuverlässige Verbindung, welche besonders widerstandsfähig gegenüber auftretenden Querkräften ist.

Der Überlappungsabschnitt 5 umfasst hier einen ersten Teilabschnitt 15 und einen zweiten Teilabschnitt 25, welche durch einen rampenförmig verlaufenden dritten Teilabschnitt 35 miteinander verbunden sind. Dabei weist der am vorderen Ende des Vaterelements 220 angeordnete erste Teilabschnitt 15 einen geringeren Durchmesser als der weiter hinten liegende zweite Teilabschnitt 25 auf. Durch eine solche Ausgestaltung wird ein entsprechend langer Überlappungsabschnitt 5 ermöglicht, ohne dass die Kupplungseinrichtung 2 insgesamt verlängert werden muss. Zudem ermöglichen die unterschiedlichen Durchmesser sowie der rampenförmige Teilabschnitt 35 ein besonders schnelles und unkompliziertes Einführen beim Kupplungsvorgang.

Im ersten Teilabschnitt 15 des Überlappungsabschnitts 5 ist hier eine Dichtungseinrichtung 6 angeordnet. Die Dichtungseinrichtung 6 umfasst hier zwei parallel nebeneinander angeordnete O-Ringe 16, 26. Die O-Ringe 16, 26 sind teilweise in jeweils eine Nut 36 eingelassen, die in die Wandung des Vaterelements 220 eingearbeitet ist. Es können auch drei oder mehr O-Ringe vorgesehen sein. Möglich ist auch eine Ausgestaltung mit lediglich einem O-Ring. Durch eine derartige radial verlaufende Dichtungseinrichtung 6 kann eine kraftstoffdichte Kupplung gewährleistet werden, ohne dass ein bestimmter Anpressdruck auf die beiden Kupplungselemente 12, 22 einwirken müsste. Die radiale Dichtungseinrichtung 6 innerhalb des Überlappungsabschnitts 5 wirkt sich somit besonders vorteilhaft auf die Widerstandsfähigkeit der Verbindung gegenüber Querkräften aus.

Um ein unerwünschtes Entkuppeln durch ein Auseinanderziehen der Kupplungselemente 12, 22 zu verhindern, ist hier eine Sicherungseinrichtung 4 vorgesehen. Dabei ist an dem Mutterelement 120 ein Sicherungsabschnitt 14 ausgebildet, in welchen ein Vorsprung 24 des Vaterelements 220 einführbar ist. Sind das Mutterelement 120 und das Vaterelement 220 korrekt miteinander gekoppelt, befindet sich der Vorsprung 24 innerhalb des Sicherungsabschnitts 14. Um ein unerwünschtes Kuppeln zu unterbinden, wird der Vorsprung 24 an einem Heraustreten aus dem Sicherungsabschnitt 14 durch ein formschlüssig anliegendes Sicherungselement 34 gehindert.

Das Sicherungselement 34 ist hier als eine Federklammer 44 ausgebildet, welche um die äußere Wandung des Mutterelements 120 gelegt ist. Dabei weist die Wandung des Mutterelements 120 abschnittsweise Sicherheitsaussparungen 140 auf, durch welche sich die Federklammer 44 in den Sicherungsabschnitt 14 erstreckt und sich als formschlüssiges Hindernis hinter den Vorsprung 24 legt. Eine solche Sicherungseinrichtung 4 ist erstens kostengünstig herzustellen und zu montieren und bietet zudem eine gegenüber auftretenden Kräften und Vibrationen sehr beständige Sicherung. Zudem eignet sich eine solche Sicherungseinrichtung 4 besonders gut für metallische Kupplungselemente 12, 22, welche keine flexiblen Rastnasen aufweisen.

Der Vorsprung 24 ist hier an seiner Vorderseite 240 angeschrägt, sodass bei einem Einstecken des Vaterelements 220 in das Mutterelement 120 die Federklammer 44 automatisch aus dem Sicherungsabschnitt 140 gedrückt wird. Die Rückseite des Vorsprungs 24 ist mit einem entsprechenden Hinterschnitt ausgebildet, sodass bei einer korrekt erfolgten Kuppelung die Federklammer 44 durch ihre Federspannung von selbst wieder in den Sicherungsabschnitt 14 zurückspringt. Das dabei auftretende Geräusch der zurückspringenden Federklammer 44 kann beispielsweise als eine akustische Kontrolle für eine korrekt erfolgte Kupplung vorgesehen sein. Eine solche selbstsichernde Verbindung bietet beispielweise gegenüber Schraubverbindungen eine erheblich schnellere und kostengünstigere Montage.

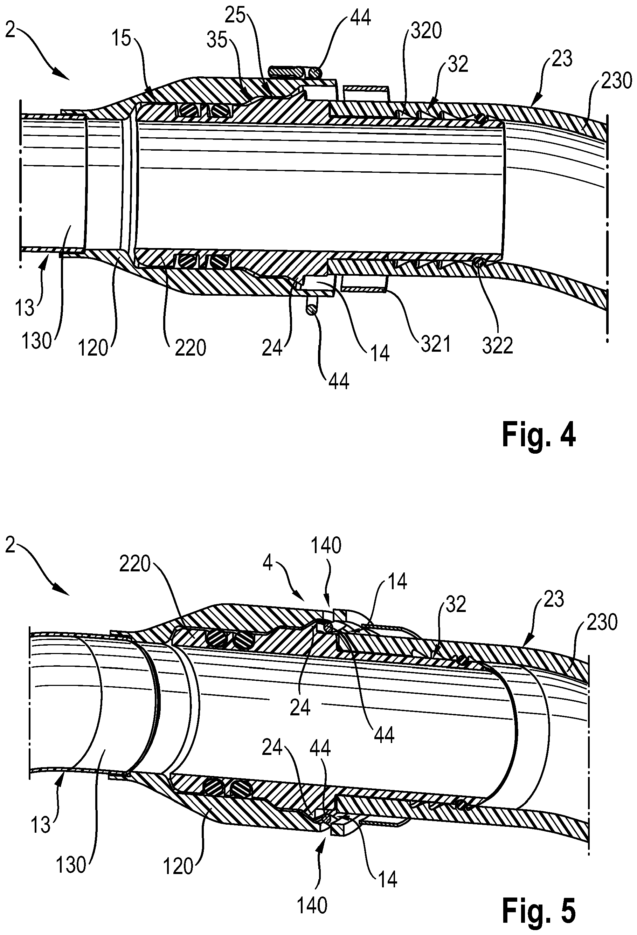

Die Figur 4 zeigt eine Kuppelungseinrichtung 2 in einer geschnittenen Darstellung mit einem Mutterelement 120, welches hier mit einer als Einfüllrohr 130 ausgebildeten metallischen Leitung 13 verschweißt ist. Die gezeigte Kuppelungseinrichtung 2 ist in einer anderen Ebene geschnittenen als die zuvor gezeigte Kuppelungseinrichtung 2 in der Figur 3. Das Vaterelement 220 ist mit einer Leitung 23 aus einem Kunststoffmaterial verbunden. Als Kunststoffmaterial wird beispielsweise ein Werkstoff wie HDPE oder EVOH oder ein sonstiger geeigneter und entsprechend kraftstoffresistenter Kunststoff gewählt. Die Leitung 23 ist z. B. als ein Tankstutzen 230 ausgebildet. Zur Verbindung mit der Leitung 23 aus einem Kunststoffmaterial umfasst das Vaterelement 220 einen Aufsteckbereich 32 mit einer gerippten Oberfläche. Die Rippen 320 sind dabei nebeneinander angeordnet und verlaufen jeweils radial um den Aufsteckbereich 32. Um eine aufgesteckte Leitung 23 zusätzlich zu sichern, ist hier eine Schlauchschelle 321 vorgesehen. Vorzugsweise wird für die Leitung 23 ein Kunststoffmaterial gewählt, welches durch den Kontakt mit dem Kraftstoff in einem bestimmten Maß aufquillt, sodass die Schlauchschelle 321 sich setzen kann. Zudem umfasst der Aufsteckbereich 32 hier einen radial verlaufenden O-Ring 322 zur Abdichtung.

Der Aufsteckbereich 32 ist hier vorzugsweise stoffschlüssig mit dem Vaterelement 220 verbunden. Insbesondere wird der Aufsteckbereich 32 an dem Bereich des Vaterelements 220 gekoppelt, welcher sonst zur stoffschlüssigen Verbindung mit einer Metallleitung vorgesehen ist. Das hat den Vorteil, das keine konstruktiven Veränderungen am Vaterelement 220 notwendig sind, wenn Kunststoffleitungen oder metallische Leitungen eingesetzt werden. Beispielsweise werden das Vaterelement 220 und der Austeckbereich 32 miteinander verschweißt. Möglich ist auch, dass eine einstückige Ausbildung von Vaterelement 220 und Austeckbereich 32 vorgesehen ist.

Die Figur 5 zeigt die Kuppelungseinrichtung 2 aus der Figur 4 in einer perspektivischen Ansicht in einer anderen Schnittebene. Die Anordnung der Sicherungsaussparungen 140 innerhalb der Wandung des Mutterelements 120 ist hier besonders gut zu erkennen. Gut zu erkennen ist auch der Verlauf der Federklammer 44 innerhalb des Sicherungsabschnitts 14 nach dem Eintritt durch die Sicherungsaussparung 140. Die Federklammer 44 erstreckt sich durch die Sicherungsaussparung 140 und legt sich hinter den Vorsprung 24, sodass ein Entkuppeln formschlüssig unterbunden ist.

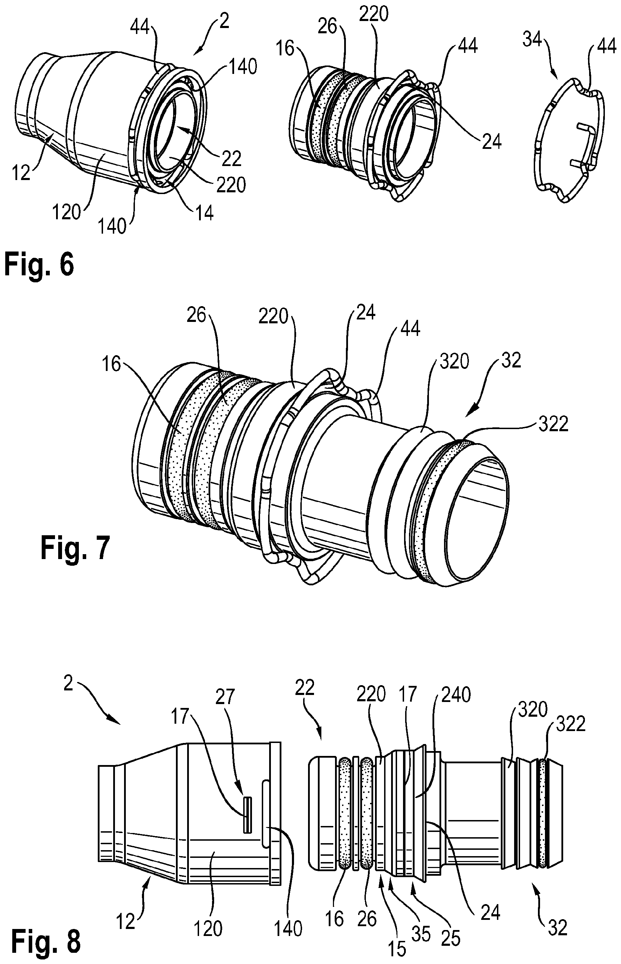

In der Figur 6 ist eine Kuppelungseinrichtung 2 mit einem Mutterelement 120 und einem Vaterelement 220 in einer perspektivischen Darstellung gezeigt. In der linken Darstellung sind Mutterelement 120 und Vaterelement 220 gekuppelt und mit der Federklammer 44 gesichert. Die Federklammer 44 läuft dabei in das Mutterelement 120 und tritt durch die Sicherungsaussparungen 140 in den Sicherungsabschnitt 14 ein und legt sich dort hinter den Vorsprung 24 des Vaterelements 220. An dem hier gezeigten Ende des Vaterelements 220 kann beispielsweise ein Aufsteckbereich 32 oder eine metallene Rohrleitung angeschweißt werden.

In der mittleren Darstellung wurde zur besseren Übersichtlichkeit das Mutterelement 120 nicht dargestellt. In der rechten Darstellung ist das als Federklammer 44 ausgebildete Sicherungselement 34 separat perspektivisch darstellt. Die Federklammer 44 ist ringförmig gebogen. Dabei sind die für den Eintritt in die Sicherungsaussparung 140 vorgesehenen Bereiche der Federklammer 44 leicht nach innen gebogen. Zudem ist die Federklammer 44 an den Enden mit einer entsprechenden Biegung als Montagehilfe ausgebildet. An den nach außen gebogenen Enden kann die Federklammer 44 beispielsweise in einer Montagezange aufgenommen oder auch mit den Händen gegriffen werden.

Die Figur 7 zeigt das in der Figur 6 gezeigte Vaterelement 220 mit einem angebrachten Aufsteckbereich 32. Der Aufsteckbereich umfasst hier mehrere Rippen 320 und einen O-Ring 322.

In der Figur 8 ist eine Kupplungseinrichtung 2 gezeigt, welche mit einer optischen Erkennungseinrichtung zur Kontrolle einer korrekt erfolgten Kupplung der Kupplungselemente 12, 22 ausgestattet ist. Dabei weist das Mutterelement 120 ein Sichtfenster 27 auf. Das Sichtfenster 27 ist hier als ein Einstich in die Wandung ausgebildet. Das Vaterelement 220 umfasst ein Markierungselement 17. In einem korrekt gekuppelten Zustand befindet sich das Markierungselement 17 sichtbar innerhalb des Sichtfensters 27. Dadurch kann mittels eines entsprechenden Kontrollblicks die korrekte Kupplung sehr zügig kontrolliert werden, ohne dass aufwändige Prüfungen die Montagezeit verlängern. Besonders bevorzugt ist das Markierungselement 17 innerhalb des Sichtfensters 27 zu erkennen, wenn die Federklammer 44 formschlüssig hinter dem Vorsprung 24 des Vaterelements 220 eingerückt ist.

Das Markierungselement 17 ist hier als eine umlaufende Nut innerhalb des Überlappungsabschnitts 5 ausgebildet. In die Nut kann beispielsweise ein farbiger Kunststoffring eingelegt werden. Möglich ist auch, dass ein O-Ring oder dergleichen in die umlaufende Nut gegeben wird. Es kann auch ein geschlitzter Kunststoffring eingelegt werden. Besonders bevorzugt ist die Farbe des Markierungselementes 17 dabei unterschiedlich zu der Farbgebung der zur Dichtung eingesetzten O-Ringe 16, 26, 322. Möglich ist auch, dass die Nut farbig beschichtet wird, z. B. durch Lackieren.

### Bezugszeichenliste:

- 1: Fahrzeugkomponente
- 2: Kupplungseinrichtung
- 4: Sicherungseinrichtung
- 5: Überlappungsabschnitt
- 6: Dichtungseinrichtung
- 12: Kupplungselement
- 13: Leitung
- 14: Sicherungsabschnitt
- 15: Teilabschnitt
- 16: O-Ring
- 17: Markierungselement
- 22: Kupplungselement
- 23: Leitung
- 24: Vorsprung
- 25: Teilabschnitt
- 26: O-Ring
- 27: Sichtfenster
- 32: Aufsteckbereich
- 34: Sicherungselement
- 35: Teilabschnitt
- 36: Nut
- 44: Federklammer
- 45: Innendurchmesser
- 55: Länge
- 100: Kraftfahrzeug
- 101: Kraftstofftank
- 102: Verbrennungsmotor
- 103: Antrieb
- 104: Traktionsbatterie
- 110: Hybridfahrzeug
- 120: Mutterelement
- 130: Einfüllrohr
- 140: Sicherungsaussparung
- 220: Vaterelement
- 230: Tankstutzen
- 240: Vorderseite
- 320: Rippe
- 321: Schlauchschelle
- 322: O-Ring

## Patentansprüche

1. Kraftfahrzeug (100), umfassend eine Karosserie und wenigstens eine Fahrzeugkomponente (1) mit wenigstens einer Kupplungseinrichtung (2) mit zwei kuppelbaren Kupplungselementen (12, 22) zur kraftstoffdichten Verbindung zweier kraftstoffführender Leitungen (13, 23) des Kraftfahrzeugs, wobei eine der beiden Leitungen (13, 23) als ein Einfüllrohr (130) für einen Kraftstofftank (101) ausgebildet ist und die andere der beiden Leitungen (13, 23) als ein rohrförmiger Tankstutzen (230) des Kraftstofftanks (101) ausgebildet ist, und mit wenigstens einer Sicherungseinrichtung (4) zur Sicherung der verbundenen Kupplungselemente (12, 22) gegen unbeabsichtigtes Lösen voneinander,
wobei im gekuppelten Zustand zwischen einem Mutterelement (120) und einem Vaterelement (220) ein sich axial erstreckender Überlappungsabschnitt (5) mit wenigstens einer radialen Dichtungseinrichtung (6) ausgebildet ist, **dadurch gekennzeichnet, dass**
das eine Kupplungselement (12) als das mit einer der beiden Leitungen (13, 23) fest verbindbare metallische Mutterelement (120) ausgebildet ist,
das andere Kupplungselement (22) als das mit einer anderen der beiden Leitungen (13, 23) fest verbindbare metallische Vaterelement (220) ausgebildet ist, welches zur Kupplung in das Mutterelement (120) einführbar ist,
der Tankstutzen (230) an dem Kraftstofftank (101) und das Einfüllrohr (130) an der Karosserie des Kraftfahrzeugs befestigt ist.

2. Kraftfahrzeug (100) nach Anspruch 1, wobei der Überlappungsabschnitt (5) eine Länge von wenigstens der Hälfte des Innendurchmessers der mit dem Mutterelement (120) und/oder der mit dem Vaterelement (220) verbundenen Leitung (13, 23) aufweist.

3. Kraftfahrzeug (100) nach einem der vorhergehenden Ansprüche, wobei der Überlappungsabschnitt (5) wenigstens zwei radial verlaufende Teilabschnitte (15, 25) mit unterschiedlichem Durchmesser aufweist, welche durch wenigstens einen rampenförmig verlaufenden Teilabschnitt (35) verbunden sind.

4. Kraftfahrzeug (100) nach einem der vorhergehenden Ansprüche, wobei wenigstens eine der beiden Leitungen (13, 23) aus einem metallischen Werkstoff besteht.

5. Kraftfahrzeug (100) nach einem der vorhergehenden Ansprüche, wobei beide Leitungen (13, 23) aus einem metallischen Werkstoff bestehen.

6. Kraftfahrzeug (100) nach einem der beiden vorhergehenden Ansprüche, wobei die metallische Leitung (13, 23) stoffschlüssig mit dem zugehörigem Kupplungselement (12, 22) verbunden ist.

7. Kraftfahrzeug (100) nach einem der vorhergehenden Ansprüche, wobei ein Kupplungselement (12, 22) an einem Ende wenigstens einen Aufsteckbereich (32) mit gerippter Oberfläche zum Aufstecken einer aus einem Kunststoffmaterial bestehenden Leitung (13, 23) umfasst.

8. Kraftfahrzeug (100) nach einem der vorhergehenden Ansprüche, wobei die Dichtungseinrichtung (6) teilweise in wenigstens einer radial verlaufenden Nut (36) an der Außenseite des Vaterelements (220) angeordnet ist.

9. Kraftfahrzeug (100) nach einem der vorhergehenden Ansprüche, die Dichtungseinrichtung (6) wenigstens zwei O-Ringe (16, 26) umfasst.

10. Kraftfahrzeug (100) nach einem der vorhergehenden Ansprüche, wobei die Sicherungseinrichtung (4) wenigstens ein Sicherungselement (34) und wenigstens einen an einem Kupplungselement (12, 22) angeordneten Sicherungsabschnitt (14) und wenigstens einen an dem anderen Kupplungselement (12, 22) angeordneten Vorsprung (24) umfasst, wobei der Vorsprung (24) in einem verbundenen Zustand der Kupplungselemente (12, 22) in den Sicherungsabschnitt (14) eingeführt ist und wobei das Sicherungselement (34) ein Heraustreten des Vorsprungs (24) aus dem Sicherungsabschnitt (14) formschlüssig blockiert.

11. Kraftfahrzeug (100) nach Anspruch 10, wobei das Sicherungselement (34) als eine ringförmige Federklammer (44) ausgebildet ist.

12. Kraftfahrzeug (100) nach Anspruch 11, wobei die Federklammer (44) das mit dem Sicherungsabschnitt (14) versehene Kupplungselement (12, 22) wenigstens teilweise umgreift, und wobei dieses Kupplungselement (12, 22) in einer Wandung wenigstens eine Sicherungsaussparung (140) aufweist, durch welche sich die Federklammer (44) in den Sicherungsabschnitt (14) erstreckt und den im Sicherungsabschnitt (14) liegenden Vorsprung (24) hintergreift.

13. Kraftfahrzeug (100) nach Anspruch 11 oder 12, wobei der Vorsprung (24) an einer Vorderseite (240) angeschrägt ist, sodass bei einem Zusammenkuppeln der Kupplungselemente (12, 22) die im Sicherungsabschnitt (14) befindliche Federklammer (44) von dem Vorsprung (24) automatisch aus dem Sicherungsabschnitt (14) gedrückt wird.

14. Kraftfahrzeug (100) nach einem der vorhergehenden Ansprüche, wobei eines der beiden Kupplungselemente (12, 22) wenigstens ein optisches Markierungselement (17) und das andere Kupplungselement (12, 22) wenigstens ein Sichtfenster (27) umfasst, wobei in einem verbundenen Zustand der Kupplungselemente (12, 22) das Markierungselement (17) durch das Sichtfenster (27) erkennbar ist.

## Claims

1. A motor vehicle (100), comprising a body and at least one vehicle component (1) having at least one coupling device (2) with two couplable coupling elements (12, 22) for the fuel-tight connection of two fuel-conducting lines (13, 23) of the motor vehicle, wherein one of the two lines (13, 23) is designed as a filler pipe (130) for a fuel tank (101) and the other of the two lines (13, 23) is designed as a tubular tank nozzle (230) of the fuel tank (101), and with at least one securing device (4) for securing the connected coupling elements (12, 22) against unintentional release from each other,
wherein, in the coupled state, an axially extending overlapping section (5) having at least one radial sealing device (6) is formed between a female element (120) and a male element (220), **characterized in that**
the one coupling element (12) is designed as the metallic female element (120) which is fixedly connectable to one of the two lines (13, 23),
the other coupling element (22) is designed as the metallic male element (220) which is fixedly connectable to another of the two lines (13, 23) and which can be inserted into the female element (120) for coupling purposes,
the tank nozzle (230) is fastened to the fuel tank (101) and the filler pipe (130) to the body of the motor vehicle.

2. The motor vehicle (100) as claimed in claim 1, wherein the overlapping section (5) has a length of at least half of the inside diameter of the line (13, 23) connected to the female element (120) and/or of the line (13, 23) connected to the male element (220).

3. The motor vehicle (100) as claimed in either of the preceding claims, wherein the overlapping section (5) has at least two radially extending subsections (15, 25) of differing diameter, said subsections being connected by at least one subsection (35) extending in the form of a ramp.

4. The motor vehicle (100) as claimed in one of the preceding claims, wherein at least one of the two lines (13, 23) is composed of a metallic material.

5. The motor vehicle (100) as claimed in one of the preceding claims, wherein the two lines (13, 23) are composed of a metallic material.

6. The motor vehicle (100) as claimed in either of the two preceding claims, wherein the metallic line (13, 23) is connected to the associated coupling element (12, 22) in an integrally bonded manner.

7. The motor vehicle (100) as claimed in one of the preceding claims, wherein one end of a coupling element (12, 22) comprises at least one attachment region (32) having a ribbed surface for the attachment of a line (13, 23) composed of a plastics material.

8. The motor vehicle (100) as claimed in one of the preceding claims, wherein the sealing device (6) is partially arranged in at least one radially extending groove (36) on the outer side of the male element (220) .

9. The motor vehicle (100) as claimed in one of the preceding claims, the sealing device (6) comprising at least two O rings (16, 26).

10. The motor vehicle (100) as claimed in one of the preceding claims, wherein the securing device (4) comprises at least one securing element (34) and at least one securing section (14) arranged on a coupling element (12, 22) and at least one projection (24) arranged on the other coupling element (12, 22), wherein, in a connected state of the coupling elements (12, 22), the projection (24) is introduced into the securing section (14), and wherein the securing element (34) in a form-fitting manner blocks the projection (24) from emerging from the securing section (14).

11. The motor vehicle (100) as claimed in claim 10, wherein the securing element (34) is in the form of an annular spring clamp (44).

12. The motor vehicle (100) as claimed in claim 11, wherein the spring clamp (44) at least partially engages around the coupling element (12, 22) provided with the securing section (14), and wherein said coupling element (12, 22) has, in a wall, at least one securing cutout (140) through which the spring clamp (44) extend into the securing section (14) and engages behind the projection (24) lying in the securing section (14).

13. The motor vehicle (100) as claimed in claim 11 or 12, wherein the projection (24) is bevelled on a front side (240) such that, when the coupling elements (12, 22) are coupled together, the spring clamp (44) located in the securing section (14) is automatically pressed out of the securing section (14) by the projection (24).

14. The motor vehicle (100) as claimed in one of the preceding claims, wherein one of the two coupling elements (12, 22) comprises at least one visual marking element (17) and the other coupling element (12, 22) comprises at least one viewing window (27), wherein the marking element (17) can be seen through the viewing window (27) in a connected state of the coupling elements (12, 22).

## Revendications

1. Véhicule automobile (100), comportant une carrosserie et au moins un composant de véhicule (1) doté d'au moins un dispositif d'accouplement (2) comportant deux éléments d'accouplement (12, 22) pouvant être accouplés pour la liaison étanche au carburant de deux conduites (13, 23) acheminant du carburant du véhicule automobile, dans lequel l'une des deux conduites (13, 23) est réalisée sous la forme d'un tuyau de remplissage (130) pour un réservoir de carburant (101) et l'autre des deux conduites (13, 23) est réalisée sous la forme d'une tubulure de réservoir (230) tubulaire du réservoir de carburant (101), et au moins un dispositif de fixation (4) pour la fixation des éléments d'accouplement (12, 22) reliés de manière à empêcher un desserrage accidentel de l'un par rapport à l'autre,
dans lequel une partie de chevauchement (5) dotée d'au moins un dispositif d'étanchéité radial (6) et s'étendant axialement est réalisée entre un élément femelle (120) et un élément mâle (220) dans l'état accouplé, **caractérisé en ce que**
l'un des éléments d'accouplement (12) est réalisé sous forme d'élément femelle (120) métallique pouvant être relié solidement à l'une des deux conduites (13, 23),
l'autre élément d'accouplement (22) est réalisé sous forme d'élément mâle (220) métallique pouvant être relié solidement à l'autre des deux conduites (13, 23), lequel élément mâle peut être introduit dans l'élément femelle (120) pour l'accouplement,
la tubulure de réservoir (230) est fixée au réservoir de carburant (101) et le tuyau de remplissage (130) est fixé à la carrosserie du véhicule automobile.

2. Véhicule automobile (100) selon la revendication 1, dans lequel la partie de chevauchement (5) présente une longueur d'au moins la moitié du diamètre intérieur de la conduite (13, 23) reliée à l'élément femelle (120) et/ou de la conduite reliée à l'élément mâle (220).

3. Véhicule automobile (100) selon l'une des revendications précédentes, dans lequel la partie de chevauchement (5) comprend au moins deux sous-parties (15, 25) s'étendant radialement de différents diamètres, lesquelles sont reliées par au moins une sous-partie (35) s'étendant en forme de rampe.

4. Véhicule automobile (100) selon l'une des revendications précédentes, dans lequel au moins l'une des deux conduites (13, 23) est constituée d'une matière métallique.

5. Véhicule automobile (100) selon l'une des revendications précédentes, dans lequel les deux conduites (13, 23) sont constituées d'une matière métallique.

6. Véhicule automobile (100) selon l'une des deux revendications précédentes, dans lequel la conduite métallique (13, 23) est reliée par liaison de matière à l'élément d'accouplement (12, 22) associé.

7. Véhicule automobile (100) selon l'une des revendications précédentes, dans lequel un élément d'accouplement (12, 22) comporte à une extrémité au moins une zone d'enfichage (32) présentant une surface nervurée pour l'enfichage d'une conduite (13, 23) constituée d'une matière synthétique.

8. Véhicule automobile (100) selon l'une des revendications précédentes, dans lequel le dispositif d'étanchéité (6) est disposé partiellement dans au moins une rainure (36) s'étendant radialement sur le côté extérieur de l'élément mâle (220).

9. Véhicule automobile (100) selon l'une des revendications précédentes, dans lequel le dispositif d'étanchéité (6) comporte au moins deux joints toriques (16, 26).

10. Véhicule automobile (100) selon l'une des revendications précédentes, dans lequel le dispositif de fixation (4) comporte au moins un élément de fixation (34) et au moins une partie de fixation (14) disposée sur un élément d'accouplement (12, 22) et au moins une saillie (24) disposée sur l'autre élément d'accouplement (12, 22), dans lequel la saillie (24) est, dans un état relié des éléments d'accouplement (12, 22), introduite dans la partie de fixation (14), et dans lequel l'élément de fixation (34) bloque par complémentarité de forme une sortie de la saillie (24) hors de la partie de fixation (14) .

11. Véhicule automobile (100) selon la revendication 10, dans lequel l'élément de fixation (34) est réalisé sous forme de pince élastique (44) annulaire.

12. Véhicule automobile (100) selon la revendication 11, dans lequel la pince élastique (44) vient en prise au moins partiellement autour de l'élément d'accouplement (12, 22) doté de la partie de fixation (14), et dans lequel cet élément d'accouplement (12, 22) comprend au moins un évidement de fixation (140) dans une paroi, évidement à travers lequel la pince élastique (44) s'étend dans la partie de fixation (14) et vient en prise par l'arrière avec la saillie (24) située dans la partie de fixation (14).

13. Véhicule automobile (100) selon la revendication 11 ou 12, dans lequel la saillie (24) est biseautée sur un côté avant (240), de sorte que, lorsque les éléments d'accouplement (12, 22) sont accouplés l'un à l'autre, la pince élastique (44) se trouvant dans la partie de fixation (14) est pressée automatiquement par la saillie (24) hors de la partie de fixation (14).

14. Véhicule automobile (100) selon l'une des revendications précédentes, dans lequel l'un des deux éléments d'accouplement (12, 22) comporte au moins un élément de marquage visuel (17) et l'autre élément d'accouplement (12, 22) comporte au moins une fenêtre d'inspection (27), dans lequel l'élément de marquage (17) est discernable à travers la fenêtre d'inspection (27) dans un état relié des éléments d'accouplement (12, 22).
